# EUROPEAN PATENT APPLICATION

(11) **EP 3 595 279 A1**
(43) Date of publication of application: **15.01.2020**
(21) Application number: 19185423.1
(22) Date of filing: 10.07.2019
(51) Int. Cl.: H04M 11/02, H04L 12/28

(54) **INTERCOM SYSTEM, PLATFORM SYSTEM, CONTROL METHOD, AND PROGRAM**

(30) Priority: 11.07.2018 JP 2018131740
(71) Applicant: Panasonic Intellectual Property Management Co., Ltd., Osaka-shi, Osaka 540-6207 (JP)
(72) Inventor: YAMAGUCHI, Takeshi, Osaka, Osaka 540-6207 (JP); HASHIMOTO, Takanori, Osaka, Osaka 540-6207 (JP)
(74) Representative: Appelt, Christian W.

(57) **Abstract**

An object of the present disclosure is to improve user convenience. An intercom system (1) has one or more functions. The intercom system (1) includes a controller (100). The controller (100) is configured to execute linkage control to link at least one function of the one or more functions to at least one application of a plurality of types of applications in a platform system (2). The linkage control relates to at least one of transmission and reception of linkage information to and from the platform system (2).

## Description

### Technical Field

The present disclosure generally relates to intercom systems, platform systems, control methods, and programs. The present disclosure specifically relates to an intercom system having one or more functions, a platform system linked to the intercom system, and a method and a program for controlling the intercom system.

### Background Art

Document 1 (JP 2008-217435 A) describes a multiple dwelling house management system (intercom system) compatible with an earthquake early warning. The multiple dwelling house management system compatible with the earthquake early warning includes an alarm monitoring board connectable via a communication network to an earthquake information distribution server. When the alarm monitoring board receives the earthquake early warning from the earthquake information distribution server, an alarm monitoring terminal transmits an earthquake warning command to dwelling house information terminals, and each of the dwelling house information terminals receives the earthquake warning command to announce an earthquake message.

### Summary of Invention

Simply externally acquiring the earthquake early warning to cause the dwelling house information terminal to announce the earthquake message as described in Document 1 cannot, however, be said to be a very strong direct connection with (high relevance to) various functions which the intercom system intrinsically has. Moreover, since external information other than the earthquake early warning is not acquirable, applicability of the intercom system cannot be said to be very wide. Thus, it is desirable to increase the relevance and applicability of the intercom system and various assistance functions (applications) provided externally of the intercom system so as to improve convenience.

In view of the foregoing, it is an object of the present disclosure to provide an intercom system, a platform system, a control method, and a program which enables user convenience to be improved.

An intercom system according to one aspect of the present disclosure is an intercom system having one or more functions. The intercom system includes a controller. The controller is configured to execute linkage control to link at least one function of the one or more functions to at least one application of a plurality of types of applications in a platform system. The linkage control relates to at least one of transmission and reception of linkage information to and from the platform system.

A platform system according to one aspect of the present disclosure includes an apparatus to be linked to the above-described intercom system. The apparatus is configured to output setting information to the intercom system when a first condition and a second condition are satisfied. The first condition is that the apparatus is in an environment in which connection of the apparatus to an external communication network is unestablished. The second condition is that the apparatus is in an environment in which the apparatus is connected to be able to communicate with the intercom system.

A control method according to one aspect of the present disclosure is a method of controlling an intercom system having one or more functions. The control method includes a linkage control step. The linkage control step is a step of executing linkage control to link at least one function of the one or more functions to at least one application of a plurality of types of applications in a platform system. The linkage control relates to at least one of transmission and reception of linkage information to and from the platform system.

A program according to one aspect of the present disclosure is a program designed to make a computer system execute the control method described above.

### Brief Description of Drawings

FIG. 1 is a system configuration diagram illustrating an intercom system and a platform system to be linked to the intercom system according to one embodiment of the present disclosure;
FIG. 2A is a block configuration diagram illustrating the intercom system and the platform system;
FIG. 2B is a block configuration diagram illustrating an intercom device (master) of the intercom system;
FIG. 3A is a conceptual view illustrating a channel list registered on the platform system;
FIG. 3B is a conceptual view illustrating linkage between the intercom system and the platform system;
FIG. 4 is a conceptual view illustrating a portable terminal in the intercom system; and
FIG. 5 is a front view illustrating the intercom device (master) in the intercom system.

### Description of Embodiments

### (1) Schema

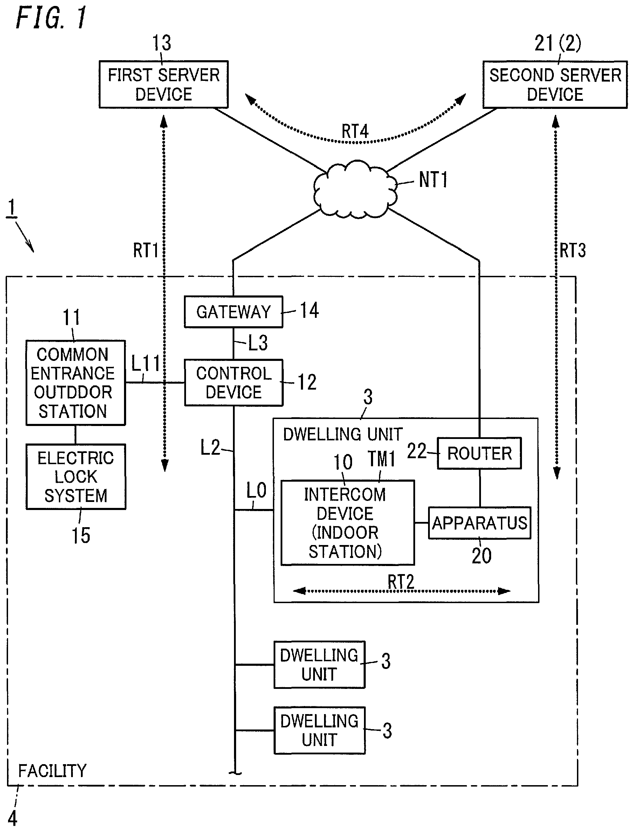

FIGS. 1 to 5 which will be described in the following embodiment are schematic views, and the ratio of sizes and the ratio of thicknesses of components in FIGS. 1 to 5 do not necessarily reflect actual dimensional ratios.

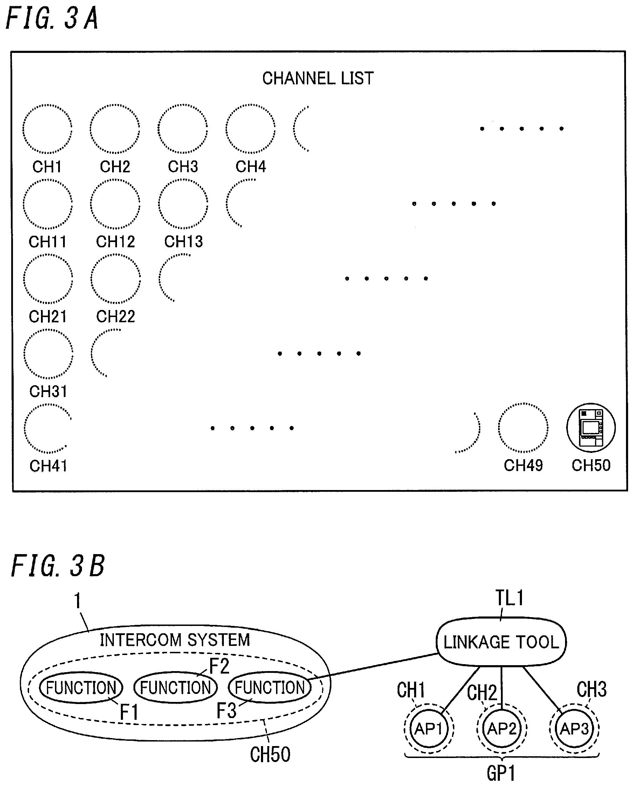

An intercom system 1 according to the present embodiment is an intercom system having one or more functions (see FIG. 3B: in the example shown in the figure, for example, functions F1 to F3). In the following description, the intercom system 1 is assumed to be, for example, a multi-residential complex intercom system to be applied to a multi-residential complex (hereinafter referred to as a facility 4) such as a condominium. Alternatively, the intercom system 1 is also applicable to a detached dwelling house instead of the multi-residential complex. Still alternatively, the intercom system 1 may also find applications in non-dwelling facilities such as buildings for tenants, office buildings, public facilities, schools, hospitals, factories, and nursing-care facilities.

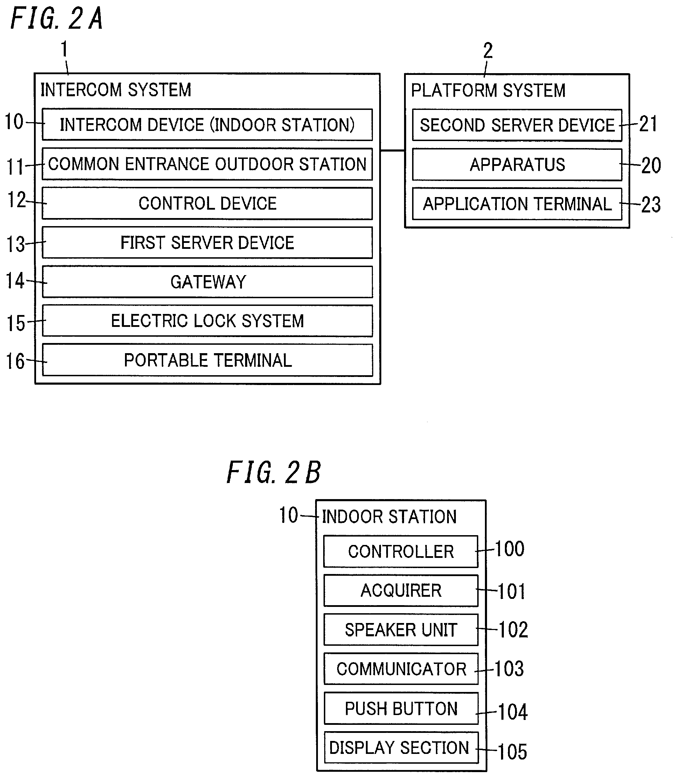

In the intercom system 1, as illustrated in FIG. 1, an information terminal TM1 (intercom device), hereinafter referred to as an indoor station (master) 10, in each of a plurality of dwelling units 3 in the facility 4 communicates with a common entrance outdoor station (slave) 11 via a control device 12. As used in the present disclosure, the term "outdoor station" refers to the common entrance outdoor station 11, that is, a common terminal (lobby station) installed in a common area, such as a lobby, of a multi-residential complex. Note that the term "outdoor station" used in the present disclosure may also refer to an entrance outdoor station (not shown) installed at an outer entrance of each dwelling unit 3 in addition to the common entrance outdoor station 11. Moreover, the common entrance outdoor station 11 may be configured to perform communication (e.g., making a speech and transmitting a video signal) with the indoor stations 10 over a plurality of multi-residential complexes, for example. The intercom system 1 includes a controller 100 (see FIG. 2B). In this embodiment, the controller 100 is assumed to be provided, for example, in the indoor station 10.

The controller 100 executes linkage control to link at least one function (in the example shown in the figure, function F3) of the one or more functions to at least one application of a plurality of types of applications AP1, AP2, .... The plurality of types of applications AP1, AP2, ... are in a platform system 2. The linkage control relates to at least one of transmission and reception of linkage information to and from the platform system 2.

With this configuration, the intercom system 1 includes the controller 100 configured to perform the linkage control relating to at least one of transmission and reception of the linkage information to and from the platform system 2. Thus, linkage between each function which the intercom system 1 has and a corresponding one of the applications in the platform system 2 is easily realizable. This increases relevance and applicability of various functions which are intrinsic to the intercom system 1 to the applications on the platform system 2, thereby improving convenience for users (e.g., dwellers).

Note that functions similar to those of the intercom system 1 may be realized by a control method, a computer program, a non-transitory storage medium storing a computer program, or the like.

### (2) Details

Next, overall configurations of the intercom system 1 and the platform system 2 according to the present embodiment will be described in further detail.

### (2.1) Overall Configuration of Intercom System

First of all, an overall configuration of the intercom system 1 will be described with reference to FIGS. 1, 2A, and 2B.

The intercom system 1 includes a first server device 13, a gateway 14, an electric lock system 15, and a portable terminal 16 (see FIG. 2B) in addition to the plurality of indoor stations 10 (in the example shown in the figure, one indoor station 10) (information terminal TM1), the common entrance outdoor station 11, and the control device 12 described above.

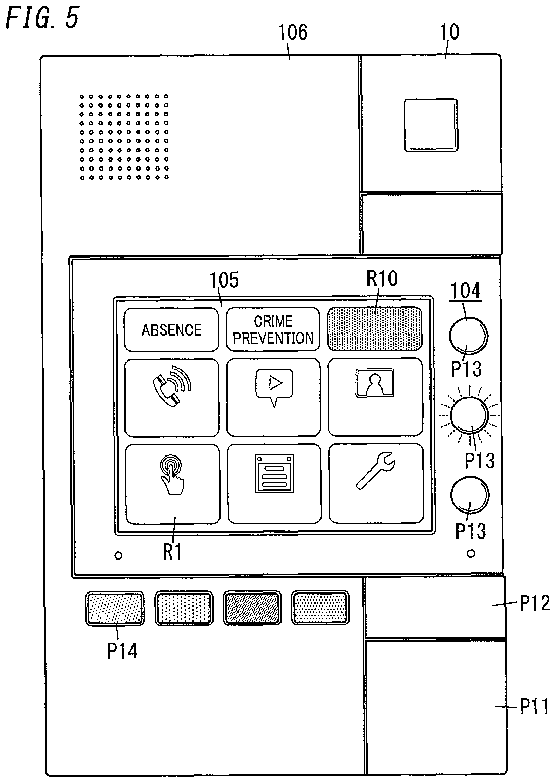

Each indoor station 10 is a dwelling unit terminal installed in a corresponding one of the dwelling units 3 in the facility 4. Each indoor station 10 is configured to perform communication (e.g., making a speech and receiving a video signal) with the common entrance outdoor station 11. Each indoor station 10 includes a display section 105 (see FIG. 5) for displaying video captured by a capture device of the common entrance outdoor station 11. An indoor station 10 may also be installed in a caretaker's room, a multi-purpose room, or the like of the multi-residential complex. Examples of the multi-purpose rooms include a meeting room, a guest room, a kids' room, and a party room which are facilities in a common area of the multi-residential complex. Note that the configuration of the indoor station 10 will be described in detail in "(2.2) Indoor station" below.

The control device 12 is configured to perform calling control and relay signals between the common entrance outdoor station 11 and each indoor station 10. The control device 12 is installed in, for example, the caretaker's room. The control device 12 relays, for example, when a visitor attempts to call any of the indoor stations 10 by using the common entrance outdoor station 11, signals to be transmitted and received between the common entrance outdoor station 11 and the indoor station 10.

Note that the intercom system 1 further includes a plurality of entrance outdoor stations (not shown). Each of the plurality of entrance outdoor stations is installed, for example, at an outer entrance of each dwelling unit 3. The plurality of entrance outdoor stations are connected to the plurality of indoor stations 10 on a one-to-one basis via connection lines. Each entrance outdoor station is configured to perform communication (e.g., making a speech and transmitting of a video signal) with an associated indoor station 10. No entrance outdoor station may be connected to the indoor station 10 installed in a multi-purpose room, for example.

The common entrance outdoor station 11 includes a speaker unit (including a loudspeaker and a microphone) that allows a speech between the common entrance outdoor station 11 and the indoor station 10. Moreover, the common entrance outdoor station 11 includes a capture device (e.g., camera) configured to capture an image of an object such as a visitor. Moreover, the common entrance outdoor station 11 includes an input interface including, for example, a touch-panel-type display section. The common entrance outdoor station 11 further includes: a plurality of push-buttons (operation sections) for receiving a push operation given by an operator; a communication interface for communication with the indoor stations 10; a sensor for measuring a change amount of infrared radiation so as to detect a person or the like; and an ID collation unit (contactless key reader).

The common entrance outdoor station 11 may have a "notification" function of displaying a various types of service information in the display section. The notification function is a function of providing service information not to visitors but mainly to dwellers each possessing an ID card including an ID collation key. For example, a dweller holds the ID card over the ID collation unit of the common entrance outdoor station 11 to check information about locking and unlocking of a dwelling unit entrance, the presence or absence of a delivered object, an alarm generation status in the dwelling unit, and the like.

As illustrated in FIG. 1, the common entrance outdoor station 11 is connected to the control device 12 via a first main line L11. The control device 12 is connected to the plurality of indoor stations 10 via a second main line L2 and a plurality of branch lines L0. Specifically, a plurality of splitters (not shown) are inserted into the second main line L2 so that the plurality of indoor stations 10 are connectable to the second main line L2. In the present embodiment, the second main line L2 branches into the plurality of branch lines L0, and the plurality of splitters are provided at respective branching points of the second main line L2 into the plurality of branch lines L0. Thus, the indoor stations 10 are connectable to the second main line L2.

The control device 12 is connected to the gateway (device) 14 via a third main line L3. The gateway 14 is connected to a communication network (wide-area network) NT1 which is a public communication network such as the Internet. The first server device (server device) 13 is connected on the communication network NT1. The control device 12 is configured to communicate with the first server device 13 via the gateway 14. This enables each indoor station 10 to communicate with the first server device 13 via intercom lines (the second main line L2 and the branch line L0). In the following description, a communication route including the intercom lines (main lines) are referred to as a first communication route RT1 in some cases (see FIG. 1). Each of the first main line L11, the second main line L2, the branch lines L0 and the connection lines may be implemented as, for example, a twisted pair cable.

The electric lock system 15 includes: an electric lock device installed on a door of a common entrance in the vicinity of the common entrance outdoor station 11; an electric lock control device; and the like. The electric lock control device is connected to be able to perform wired or wireless communication with the common entrance outdoor station 11. For example, an ID card including an ID collation key is held over the ID collation unit of the common entrance outdoor station 11, and thereby, information relating to the ID collation key is transmitted to an authentication section included in the electric lock control device. When the authentication section successfully authenticates the ID collation key, a lock of the electric lock device is released. Moreover, when the common entrance outdoor station 11 receives, from the indoor station 10, a signal as a request for unlocking or locking the lock of the electric lock device, the common entrance outdoor station 11 transmits the request to the electric lock system 15, thereby unlocking or locking the lock of the electric lock device. Note that the authentication section may be an external authentication server device separated from the electric lock control device.

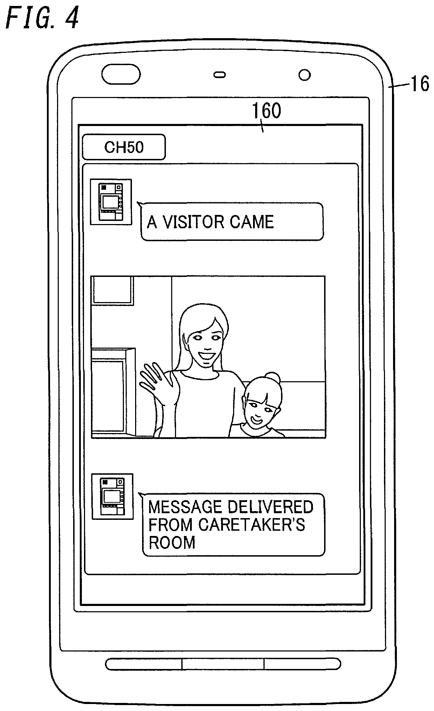

The portable terminal 16 is, for example, an information terminal such as a smartphone portable by each dweller (see FIG. 4). On the portable terminal 16, dedicated application software which allows wireless communication with the indoor station 10 is installed. For example, when a visitor inputs the room number of an indoor station 10 via the operation section of the common entrance outdoor station 11 and pushes a call button, not only the indoor station 10 but also the portable terminal 16 carried by a dweller of the dwelling unit 3 installed with the indoor station 10 executes a "call". That is, an image (which may be a still image or a moving image) of the visitor is displayed on both the indoor station 10 and the portable terminal 16, and a call tone is output.

Note that in this embodiment, as described above, it is assumed that the first server device 13 is one of components included in the intercom system 1. Note that the first server device 13 does not have to be a component of the intercom system 1 but may be a server device configured to communicate with the intercom system 1.

### (2.2) Indoor station

Next, a configuration for the indoor station 10 will be described. As illustrated in FIGS. 2B and 5, the indoor station 10 includes the controller 100, an acquirer 101, a speaker unit 102, a communicator 103, a plurality of push-buttons 104 (in FIG. 2B, one push-button 104 is shown), the display sections 105, and a housing 106 which accommodates or holds the controller 100, the acquirer 101, the speaker unit 102, the communicator 103, the plurality of push-buttons 104, and the display sections 105. Note that the acquirer 101 will be described in "(2.5) Communication Route".

The controller 100 is implemented, for example, as a microcontroller including a central processing unit (CPU) and memory as main components. The microcontroller performs the function of the controller 100 by making the CPU execute a program stored in the memory. In this embodiment, the program executed by the CPU is stored in the memory of the microcontroller in advance. However, the program may be provided by a non-transitory recording medium such as a memory card storing the program or may be provided over a telecommunications network such as the Internet. The controller 100 is configured to control the acquirer 101, the speaker unit 102, the communicator 103, and the like.

The speaker unit 102 includes a loudspeaker, a microphone, and the like and has a function of realizing calling between the common entrance outdoor station 11 and the entrance outdoor station.

The communicator 103 includes a first interface for communication with the common entrance outdoor station 11 and a second interface for communication with an apparatus 20. Note that the communicator 103 further includes an interface for enabling communication with the entrance outdoor station.

The first interface is configured to bidirectionally communicate with the common entrance outdoor station 11 via the control device 12. The first interface transmits a communication signal to the common entrance outdoor station 11. Examples of the communications signals include an audio signal and a control signal. The first interface also receives a communication signal transmitted from the common entrance outdoor station 11 and demodulates the communication signal thus received, thereby acquiring an audio signal, a video signal, or any other signal. The voice signal is output via the controller 100 to the speaker unit 102, and the video signal is output via the controller 100 to the display section 105. Moreover, the indoor station 10 communicates, via the first interface, with the first server device 13 on the first communication route RT1.

The second interface is configured to bidirectionally communicate with the apparatus 20 in, for example, a wired manner (or in a wireless manner). In the following description, this communication route is referred to as a second communication route RT2 in some cases (see FIG. 1). The apparatus 20 is assumed to be, for example, a home energy management system (HEMS) controller for managing various electric appliances in the dwelling unit 3. The apparatus 20 is configured to communicate with a router 22 installed in each dwelling unit 3 in a wired manner (or in a wireless manner).

On the other hand, the router 22 is connected to the communication network NT1 as illustrated in FIG. 1. The apparatus 20 is configured to bidirectionally communicate, via the router 22, with a second server device 21 connected on the communication network NT1.

The indoor station 10 is configured to transfer, via the router 22 (which may be a router other than the router 22), information regarding a call (call information) to the portable terminal 16 carried by a dweller. The indoor station 10 may once transmit, via the second interface, the call information to the apparatus 20 on the second communication route RT2, and the apparatus 20 may transmit the call information to the router 22. The router 22 transmits the call information to the portable terminal 16 present in a prescribed area of the dwelling unit 3 based on a wireless communication schema such as Wi-Fi (registered trademark).

The plurality of push-buttons 104 are input interfaces which receive push operations given by a dweller or the like. As illustrated in FIG. 5, the plurality of push-buttons 104 include a speech button P11 for starting of a speech, an unlock button P12 for requesting unlocking of the electric lock system 15, and three round buttons P13 for receiving requests of outputting, terminating, and the like of menu display on the display section 105. Moreover, the plurality of push-buttons 104 further include four function buttons (function keys) P14 arranged in the left-right direction below the display section 105. The function buttons P14 will be described later.

The display section 105 includes, for example, a liquid crystal display of touch panel type. The display section 105 is configured to display a video image captured by the common entrance outdoor station 11. Moreover, the display section 105 is configured to, when any one of the round buttons P13 is pressed, change its on-screen image to an on-screen menu, to display an image of a plurality of operation areas R1 for receiving various requests by touch operations to be given by a dweller or the like. The display section 105 displays, for example, the plurality of operation areas R1 as a list. The plurality of operation areas R1 include areas of button type for receiving execution requests such as a call function, a notification browse function, an information browse function, a various types of setting functions, an absence function, and a crime-prevention function. Moreover, the plurality of operation areas R1 include an operation area R10 for receiving an execution request of an application linkage function.

The indoor station 10 further includes: a video processor configured to receive a video signal from the common entrance outdoor station 11 and process video included in the video signal by signal processing; a communication interface for performing wireless communication with the portable terminal 16; and the like.

### (2.3) Overall Configuration of Platform System and Linkage thereof

Here, in the intercom system 1, in order to achieve linkage to the platform system 2, the controller 100 of the indoor station 10 is configured to execute linkage control. As used herein, the term "linkage control" refers to control of linking at least one function of a plurality of functions of the intercom system 1 to at least one application of a plurality of types of applications AP1, AP2, .... Specifically, the linkage control is control relating to at least one of transmission and reception of linkage information to and from the platform system 2. Whether the indoor station 10 transmits the linkage information or receives the linkage information depends on the function or the application to be linked.

This embodiment is described assuming that the number of functions of the intercom systems 1 is, for example, three (that is, functions F1 to F3), but the number of functions is not limited to this embodiment. The plurality of functions of the intercom system 1 may include first to seventh functions listed below.

The first function corresponds to a function relating to a call from the common entrance outdoor station 11 (a call source of the call) to the indoor station 10 (information terminal TM1 as a call destination of the call). The second function corresponds to a function relating to locking and unlocking of the electric lock system 15. The third function corresponds to a speech function among the indoor station 10, the common entrance outdoor station 11, and the portable terminal 16. The fourth function corresponds to a display function of display sections of the indoor station 10, the common entrance outdoor station 11, the portable terminal 16, and the like, and an operation function of the operation section. The fifth function corresponds to a sensing function, image-capturing function, and function of identifying a visitor or the like by the common entrance outdoor station 11. The sixth function corresponds to a function of authenticating an ID card and the like by the common entrance outdoor station 11. The seventh function corresponds to a function relating to a crime-prevention function and an absence function in the dwelling unit 3.

The plurality of types of applications AP1, AP2, ... are applications in the platform system 2. The overall configuration of the platform system 2 will be described below.

As illustrated in FIG. 2A, the platform system 2 includes, for example, the (above-described) second server device 21. Note that the apparatus 20 corresponding to the above-described HEMS controller and the like may be a component of the platform system 2 or may be a component of the intercom system 1. In the following description, it is assumed that the apparatus 20 is, for example, a component of the platform system 2 (see FIG. 2A). The apparatus 20 may execute any one of the plurality of types of applications AP1, AP2, .... Note that when the apparatus 20 is not present, the second server device 21 may be configured to perform communication via the router 22 directly with the indoor station 10 of the intercom system 1.

Moreover, the platform system 2 further includes one or more application terminals 23 installed with execution application software (execution software) for executing any one of the plurality of types of applications AP1, AP2, .... The application terminal 23 is, for example, an information terminal (or may be the portable terminal 16) carried by a dweller of the dwelling unit 3.

The second server device (apparatus management server device) 21 is connected on the communication network NT1 and is configured to bidirectionally communicate, via the router 22 in each dwelling unit 3, with the apparatus 20 in a corresponding one of the dwelling units 3. In the following description, this communication route is referred to as a third communication route RT3 in some cases (see FIG. 1).

The second server device 21 manages setting information of the apparatus 20 in each dwelling unit 3 and is capable of specifying an apparatus 20 of a specific dwelling unit 3. The setting information includes, for example, identification information or the like which is unique to the apparatus 20. The setting information may include identification information of the indoor station 10. The second server device 21 of the present embodiment is configured to bidirectionally communicate with the first server device 13 connected on the communication network NT1. The second server device 21 may receive, from the first server device 13, information such as identification information and linkage information. In the following description, this communication route is referred to as a fourth communication route RT4 in some cases (see FIG. 1).

On the other hand, the first server device 13 is a server device which performs central management of the indoor stations 10, control devices 12, the collective entrances 11, the apparatuses 20, and the like of the intercom systems 1 in a large number of facilities 4. The first server device 13 manages a plurality of types of channels CH1 to CH50 (see channel list in FIG. 3A) by using a linkage tool TL1 (see FIG. 3B). These channels are provided or managed by various types of firms, individuals, groups, and the like (hereinafter referred to as service providers), and the first server device 13 is configured to communicate with a plurality of external servers managed by these service providers. The second server device 21 may correspond to one of the external servers.

The linkage tool TL1 is a service linkage tool which links services realized by two or more applications to each other to automatize a series of operations. The linkage tool TL1 is, for example, IF This Then That (IFTTT), MyThings (registered trademark), or the like. In this embodiment, one provided service is referred to as a "channel". In FIG. 3A, each channel is shown by an icon. Each channel can include one or more applications. Then, application software (management software) which is provided by a service provider(s) and which relates to the channels CH1 to CH50 is installed in the first server device 13 in advance. Moreover, application software (execution software) regarding the channels CH1 to CH50 may be installed in application terminal 23 (or the portable terminal 16) and the like in advance carried by a user such as a dweller. The user may acquire execution software by, for example, accordingly downloading it through a website or the like managed by the service provider of the channel.

In this embodiment, the channel CH50 is assumed to be an intercom channel to which the functions F1 to F3 of the intercom system 1 are assigned. The first server device 13 is installed with a dedicated application software (management software) relating to the channel CH50, and similarly to the other channels CH1 to CH49, the channel CH50 is publicly released on the communication network NT1 by the first server device 13.

Note that in the example shown in FIG. 3B, the function F3 of the channel CH50 is linked to (associated with) a channel group GP1 including the channels CH1 to CH3 via the linkage tool TL1, but this is a mere example. For example, the function F3 may be associated with the channel group GP1 not by a function unit, but by a unit of channel CH50, or the function F1 of the channel CH50 may be associated with the application API on a one-to-one basis. Association may be set by a user such as a dweller by giving an operation to the indoor station 10 or the apparatus 20 in accordance with a contract status or the like between the user and a manager, channel provider, or the like who manages the first server device 13. Alternatively, the association may be set on the first server device 13.

In the first server device 13, user account information (including a password and the like) relating to the channel is also registered depending on a contract status between a user such as a dweller and a service provider. For example, when a user concludes a contract relating to a plurality of channels, the first server device 13 stores user account information corresponding to an associated one of the plurality of channels.

### (2.4) Linkage Example

With reference to some linkage examples between the intercom system 1 and the platform system 2, operation of these systems will be described below. These linkage examples are mere examples and should not be considered as limiting.

### (2.4.1) First Linkage Example

This example describes linkage (first linkage example) between the above-described second function (locking and unlocking) of the intercom system 1 and an application (hereinafter referred to as a "location information application") in a channel providing location information on the platform system 2.

The first linkage example is a case where the intercom system 1 receives linkage information from the platform system 2. The linkage information includes trigger information as a trigger for causing the controller 100 of the indoor station 10 to execute prescribed control relating to at least one function (in this example, the second function). The controller 100 executes linkage control relating to "reception" of the linkage information from the platform system 2. In sum, the controller 100 receives the linkage information from the platform system 2, and based on the reception of the linkage information as a trigger, the controller 100 executes the prescribed control. The prescribed control in the first linkage example is locking or unlocking of the lock of the electric lock device in the electric lock system 15.

In this embodiment, it is assumed, for example, that the application terminal 23 carried by a dweller of a dwelling unit 3 is installed with execution software relating to a location information application. The execution software may always operate in a background while power is supplied to the application terminal 23.

The application terminal 23 acquires, based on global positioning system (GPS) information, location information regarding a current location of a dweller carrying the application terminal 23 and transmits the location information as linkage information (first linkage information) to the first server device 13.

The first server device 13 specifies, from user account information of the dweller as a transmission source of the linkage information, (the indoor station 10 and the apparatus 20 of) the dwelling unit 3 of the dweller and finds out the function (in this embodiment, the second function) of the intercom system 1 linked to the location information application. Then, the first server device 13 activates management software relating to the second function in the channel CH50, and when the first server device 13 determines, based on the first linkage information, that a distance between the dweller and the facility 4 is larger than or equal to a prescribed distance, the first server device 13 converts the first linkage information into the second linkage information and transmits the second linkage information to the indoor station 10. It can be said that the linkage information in the present disclosure includes the first linkage information and the second linkage information, and the first server device 13 has, so to speak, a conversion function of converting the first linkage information into the second linkage information for the indoor station 10. In the following description, in some cases, linkage information transmitted from the transmission source to the first server device 13 is referred to as the first linkage information, and linkage information transmitted from the first server device 13 to the transmission destination is referred to as the second linkage information.

The second linkage information in the first linkage example includes, for example, identification information of at least one of the indoor station 10 and the apparatus 20, and information (trigger information) that the linkage target function is the second function. The first server device 13 transmits the second linkage information to the indoor station 10 on the first communication route RT1 (via the control device 12). Alternatively, the first server device 13 may transmit the second linkage information to the indoor station 10 by way of the fourth communication route RT4 → the third communication route RT3 → the second communication route RT2.

On the other hand, when the controller 100 of the indoor station 10 receives the second linkage information, the controller 100 transmits, via the common entrance outdoor station 11, a control signal for locking the lock of the electric lock device to the electric lock system 15. Note that the electric lock device mentioned herein is, as described above, an electric lock device of a door of a common entrance in a vicinity of the common entrance outdoor station 11, and when the controller 100 receives the second linkage information, the controller 100 may transmit, to an electric lock device provided to a door of the dwelling unit 3, the control signal for locking the lock.

Determination that the distance between the dweller and the facility 4 is larger than or equal to the prescribed distance does not have to be made by the first server device 13 but may be made in operation of the execution software of the application terminal 23 or may be performed by the indoor station 10.

The first linkage example enables, for example, labor for locking of the electric lock device when a dweller goes out to be omitted, which improves convenience for the dweller. Moreover, even when the dweller forgets to perform locking, locking control is automatically performed, and therefore, it is possible to suppress a reduction in security of the facility 4 and the dwelling unit 3.

Note that in the above-described example, the second function relates to switching from unlocking to locking but may relate to switching from locking to unlocking. For example, when the location information application determines, based on a change of location information (motion vector of a user), that the dweller is in the middle of returning home, the lock of the electric lock device may be unlocked when the location information shows a vicinity of the lock of the electric lock device.

### (2.4.2) Second Linkage Example

This example describes linkage (second linkage example) between the second function (locking and unlocking) of the intercom system 1 and an application (hereinafter referred to as a "household appliance application") in a channel which provides power source management of the household appliance on the platform system 2.

The second linkage example is a case where the intercom system 1 transmits linkage information to the platform system 2. The linkage information includes trigger information as a trigger for executing prescribed control relating to at least one application (in this example, household appliance application) by the platform system 2. The controller 100 of the indoor station 10 executes linkage control relating to "transmission" of linkage information to the platform system 2. In sum, when the second function is executed, the controller 100 generates linkage information and transmits the linkage information to the platform system 2. Then, based on the reception of the linkage information as a trigger, the platform system 2 executes the prescribed control. The prescribed control in the second linkage example is OFF control (or ON control) of the household appliance in the dwelling unit 3.

In this example, it is assumed that a management unit (which may be an apparatus 20 such as an HEMS controller) is installed in the dwelling unit 3. The management unit is configured to transmit an OFF or ON control signal to one or more household appliances based on, for example, a wireless communication schema such as Wi-Fi (registered trademark). The management unit is configured to communicate with a router 22 installed in each dwelling unit 3, for example, in a wired manner (or in a wireless manner). The management unit is installed with execution software relating to household appliance application in advance. In this case, the management unit is one of components in the platform system 2.

When the indoor station 10 receives a signal denoting, for example, that the lock of the electric lock device of the electric lock system 15 is locked, the indoor station 10 generates first linkage information and transmits the first linkage information to the first server device 13. The first linkage information in the second linkage example includes, for example, identification information of at least one of the indoor station 10 and the apparatus 20, and information (trigger information) that the linkage target function is the second function. Note that when the indoor station 10 receives a signal denoting that the lock of the electric lock device provided to the door of the dwelling unit 3 is locked, the indoor station 10 may transmit the first linkage information to the first server device 13. The indoor station 10 transmits, for example, the first linkage information to the first server device 13 by way of the first communication route RT1 (via the control device 12). Alternatively, the indoor station 10 may transmit the first linkage information to the first server device 13 via the router 22 by way of the second communication route RT2 → the third communication route RT3 → the fourth communication route RT4.

When the first server device 13 receives the first linkage information, the first server device 13 specifies the indoor station 10 and the apparatus 20, which correspond to the transmission source of the first linkage information, so as to find out an application to be linked to the second function (in this embodiment, a household appliance application). Then, the first server device 13 activates management software relating to the household appliance application to generate second linkage information for the management unit and transmits the second linkage information to the management unit in the dwelling unit 3 as the transmission source of the first linkage information.

The first server device 13 transmits the second linkage information to the management unit via the router 22 by way of the fourth communication route RT4 → the third communication route RT3 (this route is preferable when the management unit is the apparatus 20). Alternatively, the first server device 13 may transmit the second linkage information to the management unit via the indoor station 10 and the router 22 by way of the first communication route RT1.

On the other hand, when the management unit receives the second linkage information from the first server device 13, the management unit transmits a control signal to the one or more household appliances under management of the management unit to turn off a power source(s) of the one or more household appliances. Note that the household appliance is a controlled load having a communication function which enables communication with the management unit, and the household appliance is assumed to be, for example, an illumination load or an air conditioner.

In the second linkage example, for example, simply locking the lock of the electric lock device when a dweller goes out enables the power source(s) of one or more household appliances to be collectively turned off, which improves convenience for the dweller. Moreover, it is possible to reduce an increase in power consumption due to dweller's forgetting to turn off the power source(s) of the household appliances.

In the above-described example, the second function relates to switching from unlocking to locking but may relate to switching from locking to unlocking. For example, power sources of house hold appliances such as an illumination load and an air conditioner may be controlled to be turned on while linked to the switching from locking to unlocking.

### (2.4.3) Third Linkage Example

This example describes linkage (third linkage example) between each of the first and fifth functions of the intercom system 1 and an application (hereinafter referred to as a "notification application") in a channel which is on the platform system 2 and which provides push notification. The first function relates to a call, and the fifth function relates to capturing an image of a visitor.

As used herein, the term "push notification" is assumed to be, for example, notification distributed based on push-type information distribution in which the application terminal 23 carried by a user such as a dweller is caused to notify information without requiring an active operation given by the user. It is assumed that the application terminal 23 is installed with execution software relating to the notification application. The execution software may always operate in a background while power is supplied to the application terminal 23.

The third linkage example is a case where the intercom system 1 transmits linkage information to the platform system 2. The linkage information includes trigger information as a trigger for causing the platform system 2 to execute prescribed control relating to at least one application (in this embodiment, a notification application). When the first and fifth functions are executed, the controller 100 generates the linkage information and transmits the linkage information to the platform system 2. Then, based on the reception of the linkage information as a trigger, the platform system 2 executes the prescribed control. The prescribed control in the third linkage example is push notification to the application terminal 23.

When the indoor station 10 receives a call from, for example, the common entrance outdoor station 11 and further receives an image (e.g., a still image) of a visitor captured by a capture device of the common entrance outdoor station 11, the indoor station 10 generates first linkage information and transmits the first linkage information to the first server device 13. The first linkage information in the third linkage example includes, for example, identification information of at least one of the indoor station 10 and the apparatus 20, information (trigger information: call information relating to a call) that the linkage target function is the first and fifth functions, and the like. At this time, the image of the visitor may also be included in the first linkage information and transmitted to the first server device 13. Similarly to the second linkage example, the indoor station 10 may transmit the first linkage information to the first server device 13 by way of the first communication route RT1, or by way of the second communication route RT2 → the third communication route RT3 → the fourth communication route RT4.

When the first server device 13 receives the first linkage information, the first server device 13 specifies the indoor station 10 and the apparatus 20, which correspond to the transmission source of the first linkage information, so as to find out an application (in this example, the notification application) to be linked to the first and fifth functions. Then, the first server device 13 activates management software relating to the notification application to generate second linkage information for the application terminal 23, and the first server device 13 transmits the second linkage information directly to the application terminal 23 carried by a dweller of the dwelling unit 3 as the transmission source of the first linkage information.

When the application terminal 23 receives the second linkage information from the first server device 13, the application terminal 23 presents notification information by push notification. For example, FIG. 4 shows that the application terminal 23 (portable terminal 16) presents the notification information on a display section 160. Specifically, the application terminal 23 outputs, on the display section 160, an image captured by the common entrance outdoor station 11 and message information saying "a guest came". Note that when the entrance outdoor station of each dwelling unit 3 is equipped with a capture device, the application terminal 23 may output an image captured by the entrance outdoor station and message information saying "a guest came".

In the third linkage example, for example, a dweller can know that a visitor came even when the dweller is outside, which improves convenience for the dweller.

In the above-described example, the push notification presents the notification information, but notification requiring an active operation given by a user may present the notification information. For example, an electronic mail may perform notification to the application terminal 23, or accessing a specific web page from the application terminal 23 may allow the notification information to be browsed.

Moreover, in the above-described example, the first function and the fifth function are linked to the notification application, but one of the first function and the fifth function may be linked to the notification application. Moreover, the fifth function may include, in addition to a function relating to capturing of an image, a function relating to identification. That is, the common entrance outdoor station 11 may have a function of identifying the type of a person (e.g., a family member, an acquaintance of a dweller, or a deliverer) who operates the common entrance outdoor station 11 by face authentication based on the image captured or collation of an ID collation key, and the notification information may contain a result of the identification. When the entrance outdoor station of each dwelling unit 3 is equipped with a capture device, the entrance outdoor station may have a function of identifying the type of a person who operates the entrance outdoor station by, for example, face authentication or collation of an ID collation key, and the notification information presented may include a result of the identification. For example, linkage of the fifth function (identification) to the notification application may notify the application terminal 23 carried by parents of message information saying "your child returned home".

Images of a visitor or the like captured by the common entrance outdoor station 11 may be utilized as reference images in various types of authentication processes. That is, reference images acquired by the common entrance outdoor station 11 are accumulated and are linked to other authentication applications, thereby improving applicability of the other authentication applications.

### (2.4.4) Fourth Linkage Example

This example describes linkage (fourth linkage example) between the fourth function of the intercom system 1 and an application (hereinafter referred to as a "specific application") of a specific channel on the platform system 2. The fourth function is a display function of the display sections and an operation function of the operation sections in the indoor station 10, the common entrance outdoor station 11, the portable terminal 16, and the like. In this example, for example, the fourth function is a display function and an operation function of the display section 105 in the indoor station 10.

On the other hand, the type of a specific application is not particularly limited in this example. The specific application may be, for example, a location information application, a household appliance application, a notification application described in the first to third linkage examples, or other applications. Thus, in this example, the description of operation relating to the specific application is omitted.

In the fourth linkage example, as illustrated in FIG. 5, the indoor station 10 displays an image of the operation area R10 dedicated for linkage at, for example, an upper right location in an on-screen menu displayed on the display section 105 including a liquid crystal display of a touch panel system. The operation area R10 receives an execution request of a function of application linkage to a specific application by a touch operation given by a dweller.

That is, the fourth linkage example is a case where the intercom system 1 transmits linkage information to the platform system 2. The linkage information includes trigger information as a trigger for causing the platform system 2 to execute prescribed control relating to at least one application (in this example, a specific application).

When the controller 100 of the indoor station 10 receives a touch operation given to the operation area R10 (execution of the fourth function) while displaying the operation area R10 on the display section 105 (execution of the display function), the controller 100 generates linkage information and transmits the linkage information to the platform system 2. Then, based on the reception of the linkage information as a trigger, the platform system 2 executes the prescribed control relating to the specific application. The first linkage information in the fourth linkage example includes, for example, identification information of at least one of the indoor station 10 and the apparatus 20, and information (trigger information) that the linkage target function is the fourth function. Similarly to the second linkage example, the indoor station 10 may transmit the first linkage information to the first server device 13 by way of the first communication route RT1, or by way of the second communication route RT2 → the third communication route RT3 → the fourth communication route RT4.

In the above-described example, the fourth function corresponds to a display function and an operation function of the display section 105 of the indoor station 10, but may correspond to an operation function of the plurality of push-buttons 104 (operation sections) of the indoor station 10. For example, the four function buttons P14 below the display section 105 may be set to be linked to a first specific application, a second specific application, a third specific application, and a fourth specific application from the left. In sum, when a user such as a dweller pushes the leftmost function button P14, the indoor station 10 may receive an execution request of the first specific application and transmit linkage information to the platform system 2.

In the fourth linkage example, for example, a dweller can perform the execution request of the specific application by the display section 105 or the function button P14 of the indoor station 10, which improves convenience for the dweller.

The above-described example corresponds to a case where the indoor station 10 transmits the linkage information to the platform system 2 but the linkage information may be received from the platform system 2. That is, when the indoor station 10 receives, with a linkage to execution of the specific application, second linkage information from the first server device 13, the indoor station 10 may display information relating to the specific application as a message on the display section 105. For example, when the specific application is the location information application described in the first linkage example, message information saying, for example, "father returns home soon" may be displayed on the display section 105. When the specific application is an application for providing information relating to a delivery box, message information saying, for example, "a package has been delivered" may be displayed on the display section 105.

Alternatively, as illustrated in FIG. 5, notification may be made by, for example, causing any one of the push-buttons 104 (in the example shown in the figure, the round button P13 at the center) to output light (continuously output light or intermittently output light). For example, when the specific application is an application for providing information relating to the weather forecast, the round button P13 may be caused to intermittently output light in an orange color when rain is forecasted. In this case, a dweller can obtain meteorological information without giving an operation to the indoor station 10.

Moreover, the display section 105 of the indoor station 10 in the fourth linkage example may be replaced with a display section or the like of another information terminal. That is, message information saying, for example, "a package has been delivered" may be displayed on the display section 160 of the portable terminal 16.

When the specific application is an application for providing a warning (event information) about "a specific event" such as fire, typhoon, earthquake, or tsunami, the display section 105, the speaker unit 102, or the like may perform notification of alarm information relating to the specific event. Note that when the intercom system 1 is equipped with an automatic fire alarm system or the like, a function of detecting "fire" occurring in the facility 4 may be a function of the intercom system 1. That is, when the intercom system 1 has a function relating to a fire alarm, the trigger information may include fire information as event information. Alternatively, when the intercom system 1 has a crime-prevention function (seventh function), trigger information may include crime-prevention information as event information.

As to crime-prevention, when the intercom system 1 includes a crime-prevention system for sensing an invader or the like, the indoor station 10 performs transmission of linkage information. When the intercom system 1 is linked to an application for providing notification relating to crime-prevention, the indoor station 10 performs reception of the linkage information.

### (2.5) Communication Route

A case where the facility 4 is, for example, a newly built multi-residential complex, and the intercom system 1 is newly introduced into the facility 4 will be descried with reference to first to fourth communication routes RT1 to RT4 in FIG. 1. In the following description, it is assumed that the second server device 21 of the platform system 2 is already in a state where the second server device 21 can bidirectionally communicate with the first server device 13. That is, the communication using the fourth communication route RT4 is established in advance.

For example, when the intercom system 1 is newly introduced into a facility 4, installation work by an executor first of all establishes the first communication route RT1 including an intercom line (main line). The installation work by the executor further establishes the second communication route RT2 between each indoor station 10 and the apparatus 20. At this stage (stage before dwellers move in), data communication from the apparatus 20 in each dwelling unit 3 through the indoor station 10, the control device 12, and the gateway 14 to the first server device 13 becomes possible.

Note that even when installation work relating to the communication line (internet line) is completed, the third communication route RT3 is in an unestablished state until dwellers actually move in and conclude provider contracts (communication contracts). In sum, immediately after the introduction of the intercom system 1, a state is realized where the first condition and the second condition are satisfied. The first condition is that the apparatus 20 is in an environment in which the apparatus 20 is not connected to the external communication network NT1. The second condition is that the apparatus 20 is in an environment in which the apparatus 20 is connected to be able to communicate with the intercom system 1.

Each indoor station 10 of the present embodiment includes the acquirer 101 (see FIG. 2B) configured to acquire, from the apparatus 20, setting information relating to the apparatus 20 (including identification ID and the like of the apparatus 20). The acquirer 101 is a communication interface. Note that the second interface of the communicator 103 may serve also as the function as the acquirer 101.

When the first condition and the second condition are satisfied, the apparatus 20 outputs the setting information to the indoor station 10. When the first condition and the second condition are satisfied, the controller 100 of the indoor station 10 transmits the setting information acquired to the platform system 2. That is, when the first condition and the second condition are satisfied, the second server device 21 of the platform system 2 can acquire the setting information of the apparatus 20 by way of the first communication route RT1 → the fourth communication route RT4 immediately after introduction of the intercom system 1. In other words, before a dweller moves in each dwelling unit 3, the second server device 21 can acquire the setting information about all the apparatuses 20 in the facility 4.

That is, when installation work of introducing the intercom system 1 into the facility 4 is performed, it is possible to transmit the setting information relating to the apparatuses 20 to the platform system 2 in advance without concluding communication contracts for using the third communication route RT3. Thus, it is possible to omit a cumbersome procedure, such as setting the setting information of the apparatus 20 to the platform system 2, which has to be performed by, for example, a dweller when the dweller moves in and concludes the communication contract for actually using the third communication route RT3.

Note that when the first condition is not satisfied, that is, the third communication route RT3 is established, it becomes possible for the platform system 2 to execute communication with the apparatus 20 over the communication network NT1 based on the setting information.

### (2.6) Advantages

The intercom system 1 of the present embodiment includes the controller 100 configured to execute the linkage control relating to at least one of transmission and reception of linkage information to and from the platform system 2. Thus, linkage of function(s) which the intercom system 1 has to application(s) on the platform system 2 is easily realizable. This increases relevance and applicability of various functions which are intrinsic to the intercom system 1 to the applications on the platform system 2, thereby improving convenience for users (e.g., dwellers).

Moreover, the controller 100 of the indoor station 10 is configured to execute linkage control by using the first communication route RT1 via the control device 12 and the first server device 13. Thus, linkage by using the intercom line (main line) is easily realizable.

In particular, immediately after introduction of the intercom system 1, using the first communication route RT1 enables setting relating to the linkage to the platform system 2 to be easily realized without concluding a communication contract for using the third communication route RT3.

### (3) Variation

The embodiment is a mere example of various embodiments of the present disclosure. Various modifications are possible depending on design and the like as long as the object of the present disclosure can be achieved. Moreover, functions similar to those of the intercom system 1 according to the embodiment may be embodied by a control method, a computer program, a non-transitory storage medium storing a computer program, or the like of the intercom system 1. Moreover, functions similar to those of the platform system 2 may be embodied by a control method, a computer program, a non-transitory storage medium storing a computer program, or the like of the platform system 2.

Variations of the embodiment will be described below. Note that any of the variations to be described below may be combined as appropriate. In the following description, the embodiment described above will be sometimes referred to as a "basic example".

The controller 100 of the intercom system 1 of the present disclosure includes a computer system. The computer system may include, as principal hardware components, a processor and memory. The processor executes a program stored in the memory of the computer system, thereby realizing functions as the controller 100 in the present disclosure. The program may be stored in the memory of each computer system in advance, provided via a telecommunications network, or provided via a non-transitory recording medium such as a computer system-readable memory card, an optical disc, or a hard disk drive storing the program. The processor of the computer system includes one or more electronic circuits including a semiconductor integrated circuit (IC) or a large-scale integrated circuit (LSI). The integrated circuit such as IC or LSI mentioned herein may be referred to in another way, depending on the degree of the integration and includes integrated circuits called system LSI, very-large-scale integration (VLSI), or ultra-large-scale integration (ULSI). A field-programmable gate array (FPGA), which is programmable after fabrication of the LSI, or a logical device which allows reconfiguration of connections in LSI or reconfiguration of circuit cells in LSI may be adopted as the processor. Those electronic circuits may be either integrated together on a single chip or distributed on multiple chips without limitation. Those multiple chips may be integrated together in a single device or distributed in multiple devices without limitation.

Also, a plurality of functions of the indoor station 10 of the intercom system 1 are integrated together in a single housing. However, this is only an example and should not be construed as limiting. For example, components of the indoor station 10 may be distributed in multiple different housings. Still alternatively, at least some functions of the indoor station 10 (such as that of the controller 100) may be implemented as a cloud computing system as well. Conversely, all of those functions of the indoor station 10 may also be integrated together in a single housing as in the embodiment described above.

In the basic example, the intercom system 1 includes the first server device 13 connected on the communication network NT1. Moreover, in the basic example, the indoor station 10 communicates with the first server device 13 located outside the facility 4, and therefore, the basic example may be referred to as a global linkage. However, the linkage in the present disclosure is not limited to the global linkage. The linkage may be, for example, a local linkage performed directly between the indoor station 10 and the apparatus (e.g., apparatus 20) in each dwelling unit 3 or the facility 4.

As to the local linkage, the linkage tool TL1 may be registered in the apparatus 20. The controller 100 of the indoor station 10 executes linkage control to link at least one function of one or more functions to a specific function of the apparatus 20 of the platform system 2. For example, in the second linkage example of the basic example, the indoor station 10 transmits linkage information to the apparatus 20 when the second function (locking) is executed, and thereby, the apparatus 20 may perform OFF control on a household appliance in the dwelling unit 3. Alternatively, when the second function (unlocking) is executed, the apparatus 20 transmits linkage information to the indoor station 10, and thereby the apparatus 20 may perform ON control on a household appliance such as an air conditioner.

As to the local linkage, when the indoor station 10 receives from the apparatus 20 linkage information as a result of a specific function executed on the apparatus 20, the first to seventh functions and the like described in the basic example may be executed.

Moreover, the local linkage may be performed once via the first server device 13 or the second server device 21. For example, the second server device 21 may have to manage setting information and the like of the apparatus 20. In this case, the indoor station 10 may send first linkage information to the second server device 21 once, the first linkage information may be sent from the second server device 21 to the apparatus 20, and the apparatus 20 may then convert the first linkage information into second linkage information. When the setting information of the apparatus 20 has to be managed by the second server device 21, the setting information may be transmitted to the platform system 2 by way of the first communication route RT1 → the fourth communication route RT4 even immediately after the introduction of the intercom system 1

In the basic example, the controller 100 is included in the indoor station 10. However, a function corresponding to the controller 100 may be provided to a terminal, for example, the common entrance outdoor station 11, other than the indoor station 10. That is, the common entrance outdoor station 11 may be configured to be linked to the platform system 2 by way of the first communication route RT1. Moreover, the electric lock control device of the electric lock system 15 may be configured to be linked to the platform system 2 by way of the first communication route RT1.

In the basic example, it is assumed that the application terminal 23 is the portable terminal 16 such as a smartphone. However, the application terminal 23 may be a robot having a dialogue function with, for example, a user such as a dweller. The robot may output a voice message saying, for example, "a package has been delivered".

In the basic example, two server devices, namely, the first server device 13 of the intercom system 1 and the second server device 21 of the platform system 2 are connected on the communication network NT1. However, all functions of these two server devices may be integrated into a server device or distributed on three or more server devices. In sum, the fourth communication route RT4 may be omitted, or a large number of fourth communication routes RT4 may be provided.

In the basic example, the linkage tool TL1 is registered in the first server device 13. Moreover, in the above-described variation, the linkage tool TL1 is registered in the apparatus 20. However, the linkage tool TL1 may be registered in the second server device 21 or may be registered in the indoor station 10 or the like.

### (4) Summary

As described above, an intercom system (1) according to a first aspect is an intercom system having one or more functions. The intercom system (1) includes a controller (100). The controller (100) is configured to execute linkage control to link at least one function of the one or more functions (F1 to F3) to at least one application of a plurality of types of applications (API, AP2, ...). The plurality of types of applications (API, AP2, ...) are in a platform system (2). The linkage control relates to at least one of transmission and reception of linkage information to and from the platform system (2). According to the first aspect, linkage between the function which the intercom system (1) has and the application on the platform system (2) is easily realizable. The relevance and applicability of various functions which are intrinsic to the intercom system (1) to applications on the platform system (2) are increased, which enables user convenience to be improved.

In an intercom system (1) of a second aspect referring to the first aspect, the linkage information preferably includes trigger information. The trigger information serves as a trigger for causing the platform system (2) to execute prescribed control relating to the at least one application. The controller (100) is configured to execute the linkage control relating to the transmission of the linkage information to the platform system (2). According to the second aspect, linkage of the intercom system (1) to the platform system (2) is easily realizable.

In an intercom system (1) of a third aspect referring to the second aspect, the trigger information is preferably as follows. That is, the trigger information preferably includes at least one of call information relating to a call to an information terminal (TM1) as a call destination of the call and event information which relates to a specific event and which is acquired by the information terminal (TM1). According to the third aspect, linkage of the information terminal (TM1) to the platform system (2) is easily realizable.

In an intercom system (1) of a fourth aspect referring to any one of the first to third aspects, the linkage information preferably includes trigger information which serves as a trigger for causing the controller (100) to execute prescribed control relating to the at least one function. The controller (100) is preferably configured to execute the linkage control relating to the reception of the linkage information from the platform system (2). According to the fourth aspect, linkage of the platform system (2) to the intercom system (1) is easily realizable.

An intercom system (1) of a fifth aspect referring to any one of the first to fourth aspects preferably further includes a control device (12). The control device (12) is preferably configured to control communication between any one of a plurality of information terminals (TM1) as a call destination of a call and a common entrance outdoor station (11) as a call source of the call. The controller (100) is preferably configured to execute the linkage control via the control device (12) to link the at least one function to the at least one application. According to the fifth aspect, linkage by using an intercom line (main line) is easily realizable. For example, linkage to the platform system (2) is easily realizable without concluding a communication contract for using a third communication route (RT3).

In an intercom system (1) of a sixth aspect referring to any one of the first to fifth aspects, the controller (100) is preferably configured as follows. That is, the controller (100) is preferably configured to execute the linkage control via a server device (a first server device 13) to link the at least one function to the at least one application. The server device is configured to communicate with the intercom system (1). According to the sixth aspect, linkage to the platform system (2) is more easily realizable via the server device (the first server device 13).

An intercom system (1) of a seventh aspect referring to the sixth aspect preferably further includes a control device (12). The control device (12) is preferably configured to control communication between any one of a plurality of information terminals (TM1) as a call destination of a call and a common entrance outdoor station (11) as a call source of the call. The controller (100) is preferably configured to execute the linkage control via the server device (the first server device 13) and the control device (12). According to the seventh aspect, linkage by using the intercom line (main line) is more easily realizable.

An intercom system (1) of an eighth aspect referring to any one of the first to seventh aspects preferably further includes an acquirer (101). The acquirer (101) is preferably configured to acquire, from an apparatus (20) configured to execute any one of the plurality of types of applications (API, AP2, ...), setting information relating to the apparatus (20). When the first condition and the second condition are satisfied, the controller (100) preferably transmits, to the platform system (2), the setting information acquired. The first condition is that the apparatus (20) is in an environment in which the apparatus (20) is not connected to an external communication network. The second condition is that the apparatus (20) is in an environment in which the apparatus is connected to be able to communicate with the intercom system (1). According to the eighth aspect, when installation work of introducing the intercom system (1) into a facility (4) is performed, the setting information about the apparatus (20) can be transmitted to the platform system (2) in advance without concluding a communication contract for using, for example, the third communication route (RT3). Thus, it is possible to omit a cumbersome procedure, such as setting the setting information in the platform system (2), which has to be performed by, for example, a dweller when the dweller concludes the communication contract for actually using the third communication route (RT3).

An intercom system (1) according to a ninth aspect of the present disclosure is an intercom system having one or more functions. The intercom system (1) includes a controller (100) and an acquirer (101). The controller (100) is configured to execute linkage control to link at least one function of the one or more functions to a specific function in a platform system (2). The linkage control relates to at least one of transmission and reception of linkage information to and from the platform system (2). The acquirer (101) is configured to acquire, from an apparatus (20) on which the specific function is executed, setting information relating to the apparatus (20). The controller (100) is configured to transmit the setting information acquired, to the platform system (2) when a first condition and a second condition are satisfied. The first condition is that the apparatus (20) is in an environment in which the apparatus (20) is not connected to an external communication network. The second condition is that the apparatus (20) is in an environment in which the apparatus is connected to be able to communicate with the intercom system (1). According to the ninth aspect, when installation work of introducing the intercom system (1) into the facility (4) is performed, the setting information about the apparatus (20) can be transmitted to the platform system (2) in advance without concluding a communication contract for using, for example, the third communication route (RT3). Thus, it is possible to omit a cumbersome procedure, such as setting the setting information in the platform system (2), which has to be performed by, for example, a dweller when the dweller concludes the communication contract for actually using the third communication route (RT3).

A platform system (2) of a tenth aspect includes an apparatus (20) to be linked to the intercom system (1) of the eighth or ninth aspect. The apparatus (20) is configured to output the setting information to the intercom system (1) when the first condition and the second condition are satisfied. According to the tenth aspect, for example, it is possible to provide a platform system (2) which enables a cumbersome procedure such as setting of setting information by a dweller to be omitted.

A platform system (2) of an eleventh aspect referring to the tenth aspect preferably further includes an apparatus management server device (a second server device 21) configured to manage the apparatus (20). The apparatus management server device (the second server device 21) is preferably configured to acquire, when the first condition and the second condition are satisfied, setting information from the apparatus (20) via the intercom system (1). Moreover, the apparatus management server device (the second server device 21) is preferably configured to execute, when the first condition is unsatisfied, communication with the apparatus (20) over the external communication network (NT1) based on the setting information. According to the eleventh aspect, it is possible to omit a cumbersome procedure such as setting of setting information in the apparatus management server device (the second server device 21) by a dweller.

A control method according to a twelfth aspect is a control method of an intercom system (1) having one or more functions. The control method includes a linkage control step. The linkage control step is a step of executing linkage control to link at least one function of the one or more functions to at least one application of a plurality of types of applications (API, AP2, ...). The plurality of types of applications (AP1, AP2, ...) are in a platform system (2). The linkage control relates to at least one of transmission and reception of linkage information to and from the platform system (2). According to the twelfth aspect, the relevance and applicability of various functions which are intrinsic to the intercom system (1) to applications on the platform system (2) are increased, which enables user convenience to be improved.

A control method according to a thirteenth aspect is a method of controlling an intercom system (1) having one or more functions. The control method includes a linkage control step, an acquisition step, and a transmission step. The linkage control step is a step of executing linkage control to link at least one function of the one or more functions to a specific function in a platform system (2). The linkage control relates to at least one of transmission and reception of linkage information to and from the platform system (2). The acquisition step is a step of acquiring, from an apparatus (20) on which the specific function is executed, setting information relating to the apparatus (20). The transmission step is a step of transmitting the setting information acquired to the platform system (2) when a first condition and a second condition are satisfied. The first condition is that the apparatus (20) is in an environment in which the apparatus (20) is not connected to an external communication network. The second condition is that the apparatus (20) is in an environment in which the apparatus is connected to be able to communicate with the intercom system (1). According to the thirteenth aspect, the relevance and applicability of various functions which are intrinsic to the intercom system (1) to applications on the platform system (2) are increased, which enables user convenience to be improved.

A program of a fourteenth aspect is a program designed to make a computer system execute the method of the twelfth or thirteenth aspect. According to the fourteenth aspect, it is possible to provide a function which enables user convenience to be improved.

The configurations according to the second to eleventh aspects are not configurations essential for the intercom system (1) and may accordingly be omitted.

### Reference Signs List

1 INTERCOM SYSTEM
TM1 INFORMATION TERMINAL
100 CONTROLLER
101 ACQUIRER
11 COMMON ENTRANCE OUTDOOR STATION
12 CONTROL DEVICE
13 FIRST SERVER DEVICE (SERVER DEVICE)
2 PLATFORM SYSTEM
20 APPARATUS
21 SECOND SERVER DEVICE (APPARATUS MANAGEMENT SERVER DEVICE)
F1 to F3 FUNCTION
AP1, AP2, ... APPLICATION
NT1 COMMUNICATION NETWORK

## Claims

1. An intercom system (1) having one or more functions (F1 to F3), the intercom system (1) comprising a controller (100),
the controller (100) being configured to execute linkage control to link at least one function of the one or more functions (F1 to F3) to at least one application of a plurality of types of applications (API to AP3) in a platform system (2), and
the linkage control relating to at least one of transmission and reception of linkage information to and from the platform system (2).

2. The intercom system (1) of claim 1, wherein
the linkage information includes trigger information which serves as a trigger for causing the platform system (2) to execute prescribed control relating to the at least one application, and
the controller (100) is configured to execute the linkage control relating to the transmission of the linkage information to the platform system (2).

3. The intercom system (1) of claim 2, wherein
the trigger information includes at least one of
call information relating to a call to an information terminal (TM1) as a call destination of the call and
event information which relates to a specific event and which is acquired by the information terminal (TM1).

4. The intercom system (1) of any one of claims 1 to 3, wherein
the linkage information includes trigger information which serves as a trigger for causing the controller (100) to execute prescribed control relating to the at least one function, and
the controller (100) is configured to execute the linkage control relating to the reception of the linkage information from the platform system (2).

5. The intercom system (1) of any one of claims 1 to 4 further comprising a control device (12) configured to control communication between any one of a plurality of information terminals (TM1) as a call destination of a call and a common entrance outdoor station (11) as a call source of the call, wherein
the controller (100) is configured to execute the linkage control via the control device (12) to link the at least one function to the at least one application.

6. The intercom system (1) of any one of claims 1 to 5, wherein
the controller (100) is configured to execute the linkage control via a server device (13) to link the at least one function to the at least one application, the server device (13) being configured to communicate with the intercom system (1).

7. The intercom system (1) of claim 6 further comprising a control device (12) configured to control communication between any one of a plurality of information terminals (TM1) as a call destination of a call and a common entrance outdoor station (11) as a call source of the call, wherein
the controller (100) is configured to execute the linkage control via the server device (13) and the control device (12).

8. The intercom system (1) of any one of claims 1 to 7 further comprising an acquirer (101) configured to acquire, from an apparatus (20) on which any one of the plurality of types of applications (API to AP3) is executed, setting information relating to the apparatus (20), wherein
when a first condition and a second condition are satisfied, the controller (100) transmits, to the platform system (2), the setting information acquired,
the first condition is that the apparatus (20) is in an environment in which connection of the apparatus (20) to an external communication network (NT1) is unestablished, and
the second condition is that the apparatus (20) is in an environment in which the apparatus (20) is connected to be able to communicate with the intercom system (1).

9. A platform system (2) comprising the apparatus (20) to be linked to the intercom system (1) of claim 8,
the apparatus (20) being configured to output the setting information to the intercom system (1) when the first condition and the second condition are satisfied.

10. The platform system (2) of claim 9 further comprising an apparatus management server device (21) configured to manage the apparatus (20), wherein
the apparatus management server device (21) is configured to acquire, when the first condition and the second condition are satisfied, the setting information from the apparatus (20) via the intercom system (1), and
the apparatus management server device (21) is configured to execute, when the first condition is unsatisfied, communication with the apparatus (20) over the external communication network (NT1) based on the setting information.

11. A method of controlling an intercom system (1) having one or more functions (F1 to F3), the method comprising
a linkage control step of executing linkage control to link at least one function of the one or more functions (F1 to F3) to at least one application of a plurality of types of applications (API to AP3) in a platform system (2), and
the linkage control relating to at least one of transmission and reception of linkage information to and from the platform system (2).

12. A program designed to make a computer system execute the method of claim 11.
